Europäisches Patentamt

European Patent Office

Office européen des brevets

(11) Veröffentlichungsnummer: **0 056 871**
**B1**

(12) EUROPÄISCHE PATENTSCHRIFT

(45) Veröffentlichungstag der Patentschrift:
12.06.85

(21) Anmeldenummer: 81110730.9

(22) Anmeldetag: 23.12.81

(51) Int. Cl.⁴: **C 08 L 51/00,** C 08 L 71/04,
C 08 L 51/04

(54) Thermoplastische Formmassen.

(30) Priorität: 24.01.81 DE 3102251

(43) Veröffentlichungstag der Anmeldung:
04.08.82 Patentblatt 82/31

(45) Bekanntmachung des Hinweises auf die Patenterteilung:
12.06.85 Patentblatt 85/24

(84) Benannte Vertragsstaaten:
BE DE FR GB IT NL

(56) Entgegenhaltungen:
US - A - 4 128 602

(73) Patentinhaber: BASF Aktiengesellschaft,
Carl-Bosch-Strasse 38, D-6700 Ludwigshafen (DE)

(72) Erfinder: Brandstetter, Franz, Dr., Ritterbuechel 45,
D-6730 Neustadt (DE)
Erfinder: Echte, Adolf, Dr., Leuschnerstrasse 42,
D-6700 Ludwigshafen (DE)
Erfinder: Haaf, Franz, Dr., Leistadter Strasse 9,
D-6702 Bad Duerkheim (DE)
Erfinder: Hambrecht, Juergen, Dr., Werderstrasse 30,
D-6900 Heidelberg (DE)
Erfinder: Naarmann, Herbert, Dr., Haardtblick 15,
D-6719 Wattenheim (DE)

## Beschreibung

Die Erfindung betrifft thermoplastische Formmassen auf der Grundlage von schlagfest modifizierten Styrolpolymerisaten und Polyphenylenethern.

Thermoplastische Massen, die sich zur Herstellung von Formteilen eignen und die schlagzäh modifizierte Styrolpolymerisate und Polyphenylenether enthalten, sind z.B. aus den US-Patentschriften 3 383 435, 4 128 602 sowie 4 128 603 bekannt. Als Weichkomponente wird hierbei meist Polybutadien verwendet. Daneben sind auch thermoplastische Massen beschrieben, die sich zur Herstellung von Formteilen eignen, und die Polyphenylenether und schlagzäh modifizierte Styrolpolymerisate enthalten, wobei als Weichkomponente ein Polymerisat auf der Basis von Acrylsäureestern eingesetzt wird, z.B. aus der Patentschrift JA 77/32 800 bekannt. Diese Formmassen eignen sich zur Herstellung von Formteilen, die sich einmal im Vergleich zu schlagzäh modifizierten Styrolpolymerisaten, die nicht mit Polyphenylenethern abgemischt sind, durch eine bessere Wärmeformbeständigkeit und die sich zum anderen im Vergleich zu Formmassen aus Polyphenylenethern und schlagfest modifizierten Styrolpolymerisaten, die eine Weichkomponente mit vielen Doppelbindungen enthalten, durch eine verbesserte Alterungsbeständigkeit auszeichnen. Die Materialeigenschaften derartiger Formmassen sind im allgemeinen zufriedenstellend, doch hat es sich gezeigt, dass sie ein ungünstiges Fliessverhalten und eine noch zu verbessernde Alterungsbeständigkeit aufweisen.

Der vorliegenden Erfindung lag daher die Aufgabe zugrunde, thermoplastische Formmassen auf der Grundlage von schlagfest modifizierten Styrolpolymerisaten und Polyphenylenethern zu schaffen, die eine verbesserte Fliessfähigkeit besitzen und zu Formteilen mit einer verbesserten Alterungsbeständigkeit führen.

Diese Aufgabe wird erfindungsgemäss gelöst durch thermoplastische Formmassen, bei denen die Teilchen der Weichkomponente des schlagfest modifizierten Styrolpolymerisats, einen mittleren Teilchendurchmesser von grösser als 0,3 μm haben und ein Polymerisat eines Alkylesters der Acrylsäure mit 2 bis 8 Kohlenstoffatomen im Alkylrest enthalten, das durch Polymerisation des Acrylsäureesters in Gegenwart von 0,5 bis 10 Gew.-%, bezogen auf die eingesetzten Monomeren eines copolymerisierbaren, mehrfunktionellen, die Vernetzung bewirkenden Monomeren durchgeführt wird.

Unter Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Herstellung der in den Formmassen enthaltenen schlagfest modifizierten Styrolpolymerisate kann nach beliebigen Verfahren erfolgen, sofern dafür gesorgt ist, dass die oben genannte Teilchengrösse der Weichkomponente eintritt. Besonders geeignet sind solche thermoplastische Formmassen, in denen die Teilchen der Weichkomponente des schlagfest modifizierten Styrolpolymerisates einen mittleren Teilchendurchmesser von 0,3 bis 1 μm haben.

Die thermoplastischen Formmassen können schlagfest modifizierte Styrolpolymerisate und Polyphenylenether in beliebigen Mengen, beispielsweise in Mengen von 5 bis 90 Gew.-% Styrolpolymerisat und 95 bis 10 Gew.-% Polyphenylenether enthalten. Für die Herstellung von Formteilen eignen sich insbesondere solche Formmassen, die 20 bis 80 Gew.-% schlagfest modifizierte Styrolpolymerisate und 80 bis 20 Gew.-% Polyphenylenether enthalten.

Das meist angewandte Verfahren zur Herstellung der schlagzäh modifizierten Styrolpolymerisate mit einer Weichkomponente, die nur wenige Doppelbindungen enthält, ist die Polymerisation in Emulsion. Selbstverständlich sind auch andere Verfahren anwendbar, sofern die oben genannte Teilchengrösse eingestellt wird.

Als monovinylaromatische Verbindungen kommen dabei insbesondere Styrol in Betracht, ferner die kern- oder seitenkettenalkylierten Styrole. Vorzugsweise wird jedoch Styrol allein verwendet.

Die Hartkomponente kann nach den herkömmlichen Methoden erhalten werden. So kann die Polymerisation des Styrols in Masse, Lösung, Suspension oder wässriger Emulsion durchgeführt werden.

Die Hartkomponente hat vorzugsweise eine Viskositätszahl von 40 bis 140, insbesondere von 80 bis 120. Die Bestimmung der Viskositätszahl erfolgt analog DIN 53 726; dabei werden 0,5 g Material in 100 ml Toluol gelöst. Als Kautschukkomponente werden Acrylate verwendet.

Die Herstellung der Weichkomponente erfolgt in zwei Stufen. Hier wird zunächst ein Acrylester-Polymerisat hergestellt, auf das dann in einem zweiten Schritt Styrol zur Herstellung des Pfropfmischpolymerisates aufgepfropft wird.

Die Herstellung des erfindungsgemäss einzusetzenden Pfropfmischpolymerisates erfolgt nach den an sich bekannten Methoden in gebräuchlicher Art und Weise. Als Pfropfgrundlagen dient ein Acrylsäureester-Polymerisat mit einer Glasübergangstemperatur unter 0°C. Das Acrylsäureester-Polymerisat soll vorzugsweise eine Glastemperatur unter −20°C, insbesondere unter −30°C besitzen. Die Ermittlung der Glasübergangstemperatur des Acrylsäureester-Polymerisates kann z.B. nach der DSC-Methode (K.H. Illers, Makromol. Chemie 127 (1969), S.1) erfolgen. Für die Herstellung der Acrylsäureester-Polymerisate kommen die Acrylalkylester mit 2 bis 8 Kohlenstoffatomen, vorzugsweise 4 bis 8 Kohlenstoffatomen, im Alkylrest in Betracht. Als Acrylsäurealkylester, die zur Herstellung der Acrylsäureester-Polymerisate geeignet sind, seien besonders Acrylsäure-n-butylester und Acrylsäureäthylhexylester genannt. Die Acrylsäureester können bei der Herstellung der als Pfropfgrundlage dienenden Acrylsäureester-Polymerisate allein oder auch in Mischung eingesetzt werden.

Um vernetzte Acrylsäureester-Polymerisate zu erhalten, wie sie als Pfropfgrundlagen für die Herstellung der Pfropfmischpolymerisate eingesetzt werden sollen, wird die Polymerisation der Acrylsäureester in Gegenwart von 0,5 bis 10 Gew.-%, vorzugsweise 1 bis 5 Gew.-%, bezogen auf die bei der Herstellung der Pfropfgrundlagen eingesetzten gesamten Monomeren, eines copolymerisierbaren, mehrfunktionellen, vorzugsweise bifunktionellen, die Vernetzung bewirkenden Monomeren durchgeführt. Als solche bi- oder mehrfunktionellen Vernetzungs-Monomeren eignen sich Monomere, die vorzugsweise zwei, gegebenenfalls auch mehr, zur Copolymerisation befähigte äthylenische Doppelbindungen enthalten, die nicht in den 1,3-Stellungen konjugiert sind. Geeignete Vernetzungs-Monomere sind beispielsweise Divinylbenzol, Diallylmaleat, Diallylfumarat oder Diallylphthalat. Als besonders günstiges Vernetzungs-Monomeres hat sich der Acrylsäureester des Tricyclodecenylalkohols erwiesen (vgl. DE-PS 12 60 135).

Die Herstellung der erfindungsgemäss einzusetzenden Kautschukkomponente kann beispielsweise nach der in der DE-OS 19 11 882 beschriebenen Methode erfolgen. Hierzu wird z. B. zunächst ein Saatlatex hergestellt, indem der oder die Acrylsäureester und das mehrfunktionelle, die Vernetzung bewirkende Monomere, gegebenenfalls zusammen mit den weiteren Comonomeren, in wässriger Emulsion in an und für sich bekannter Weise bei Temperaturen zwischen 20 und 100°C, vorzugsweise zwischen 50 und 80°C polymerisiert werden. Es können die üblichen Emulgatoren, wie z. B. Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,1 bis 5 Gew.-%, insbesondere von 0,5 bis 2 Gew.-%, bezogen auf die bei der Herstellung der Pfropfgrundlage eingesetzten Monomeren, einzusetzen. Im allgemeinen wird bei einem Wasser- zu Monomeren-Verhältnis von 2:1 bis 0,7:1 gearbeitet. Als Polymerisationsinitiatoren dienen insbesondere die gebräuchlichen Persulfate, wie z. B. Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage eingesetzten Monomeren, eingesetzt. Als weitere Polymerisationshilfsstoffe können die üblichen Puffersubstanzen, durch welche pH-Werte von vorzugsweise 6 bis 9 eingestellt werden – z. B. Natriumbicarbonat und Natriumphosphat – sowie 0 bis 3 Gew.-% eines Molekulargewichtsreglers – wie Mercaptane, Terpene oder dimeres α-Methylstyrol – bei der Polymerisation verwendet werden. Die genauen Polymerisationsbedingungen, insbesondere Art, Dosierung und Menge des Emulgators, werden innerhalb der oben angegebenen Bereiche im einzelnen so bestimmt, dass der erhaltene Latex des vernetzten Acrylsäureester-Polymerisats einen $D_{50}$-Wert im Bereich von etwa 0,05 bis 0,15 μm, vorzugsweise im Bereich von 0,06 bis 0,12 μm, besitzt. Durch Vorlage dieses Saatlatex wird ein Latex mit der erfindungsgemässen Teilchengrösse von grösser 0,3 μm dadurch erhalten, dass durch Zugabe von weiteren Monomeren und Emulgatoren eine Weiterpolymerisation erfolgt. Dabei werden die Bedingungen in bekannter Weise (siehe z. B. Journal of Applied Polymer Science, Vol. 2 (1965), Seiten 2929 bis 2938) so eingestellt, dass lediglich die vorhandenen Polymerisatpartikel des Saatlatex weiter wachsen, aber keine neuen Latexteilchen gebildet werden.

Die Teilchengrösse des Stammpolymerisatlatex lässt sich durch Variation des Mengenverhältnisses Saatlatex zu Monomeren beliebig einstellen.

Neben dieser Saatlatexmethode sind aber auch andere zur Herstellung grobteiliger Dispersionen bekannte Polymerisationsverfahren möglich, wie sie z. B. in Houben-Weyl Bd. XIV/1, Georg Thieme Verlag 1961 S. 342 bis 348 und Seite 508 bis 515 beschrieben sind.

Zur Herstellung des Pfropfmischpolymerisats wird dann in einem zweiten Schritt in Gegenwart des so erhaltenen Latex des Acrylsäureester-Polymerisats Styrol polymerisiert. Es ist vorteilhaft, diese Pfropfmischpolymerisation von Styrol auf das als Pfropfgrundlage dienende Acrylsäureester-Polymerisat wieder in wässriger Emulsion unter den üblichen, oben aufgeführten Bedingungen durchzuführen. Die Pfropfmischpolymerisation kann zweckmässig im gleichen System erfolgen wie die Emulsionspolymerisation zur Herstellung der Pfropfgrundlage, wobei, falls notwendig, weiterer Emulgator und Initiator zugegeben werden kann. Das aufzupfropfende Styrol kann dem Reaktionsgemisch auf einmal, absatzweise in mehreren Stufen oder vorzugsweise während der Polymerisation zugegeben werden. Die Pfropfmischpolymerisation des Gemisches von Styrol und Acrylnitril in Gegenwart des vernetzten Acrylsäureester-Polymerisates wird so geführt, dass ein Pfropfgrad von 10 bis 60 Gew.-%, vorzugsweise von 30 bis 40 Gew.-% im Pfropfmischpolymerisat resultiert. Da die Pfropfausbeute bei dieser Pfropfmischpolymerisation nicht 100%ig ist, muss eine etwas grössere Menge an Styrol bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats ist jedem Fachmann geläufig und kann beispielsweise u. a. durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfmischpolymerisation entstehen im allgemeinen etwa 5 bis 15 Gew.-%, bezogen auf das Pfropfmischpolymerisat, an freiem, ungepfropftem Styrol-Polymerisat.

Je nach den bei der Pfropfmischpolymerisation für die Herstellung der Pfropfmischpolymerisate gewählten Bedingungen kann es möglich sein, dass bei der Pfropfmischpolymerisation schon ein hinreichender Anteil an Hartkomponente gebildet worden ist. Im allgemeinen wird es jedoch nötig sein, die bei der Pfropfmischpolymerisation erhaltenen Produkte mit zusätzlicher, separat hergestellter Hartkomponente zu mischen.

Unter Weichkomponente im Sinne dieser Erfindung wird der bei Raumtemperatur (25°C) in Toluol unlösliche Anteil des schlagfest modifizierten Polymerisats abzüglich etwaiger Pigmente verstanden. Die Weichkomponente entspricht also dem Gelanteil des Produktes.

Die mittlere Teilchengrösse und die Teilchengrössenverteilung wurde aus der integralen Massenverteilung nach der Methode von W. Scholtan und H. Lange, Kolloid-Z. und Z.-Polymere 250 (1972), Seiten 782 bis 796, mittels einer analytischen Ultrazentrifuge bestimmt. Die Ultrazentrifugenmessung liefert die integrale Massenverteilung des Teilchendurchmessers einer Probe. Hieraus lässt sich entnehmen, wieviel Gewichtsprozent der Teilchen einen Durchmesser gleich oder kleiner einer bestimmten Grösse haben. Der mittlere Teilchendurchmesser, der auch als $d_{50}$-Wert der integralen Massenverteilung bezeichnet wird, ist dabei als der Teilchendurchmesser definiert.

Bei den Polyphenylenethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyphenylenether können in ortho-Stellung zum Sauerstoff, Wasserstoff, Halogen, Kohlenwasserstoffe, die keine α-ständiges tert. Wasserstoffatom besitzen, Halogenkohlenwasserstoffe, Phenylreste und Kohlenwasserstoffoxi-Reste tragen. So kommen in Frage: Poly(2,6-dichlor-1,4-phenylen)ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dibrom-1,4-phenylen)ether. Bevorzugterweise wird der Poly(2,6-dimethyl-1,4-phenylen)-ether eingesetzt. Besonders bevorzugt werden Poly-2,6-dimethyl-1,4-phenylen)ether mit einer Grenzviskosität zwischen 0,45 und 0,65 dl/g (gemessen in Chloroform bei 30°C).

Die Polyphenylenether können z.B. in Gegenwart von komplexbildenden Mitteln wie Kupferbromid und sek. Dibutylamin aus den Phenolen hergestellt werden.

Die Mischungen aus den schlagzäh modifizierten Styrolpolymerisaten und Polyphenylenethern können ausserdem weitere Zusatzstoffe wie Pigmente, Farbstoffe, Füllstoffe, Flammschutzmittel, weitere verträgliche Polymere, Antistatika, Antioxidantien und Schmiermittel enthalten.

Durch Mischen der Weich- und Hartkomponente und der Polyphenylenether gelangt man zu den erfindungsgemässen thermoplastischen Formmassen. Üblicherweise erfolgt dies auf Vorrichtungen, die ein homogenes Mischen zulassen, wie Knetern, Extrudern oder Walzenmischgeräten. Neben dem guten Fliessverhalten besitzen die erfindungsgemässen Formmassen eine gute Alterungsbeständigkeit und hohe Wärmeformbeständigkeit.

Die in den Beispielen und Vergleichsversuchen genannten Teile sind Gewichtsteile.

Beispiele und Vergleichsversuche

Beispiele
a) Herstellung des Saatlatex
98 Teile Acrylsäurebutylester und 2 Teile Tricyclodecenylacrylat werden in 154 Teilen Wasser unter Zusatz von 2 Teilen Dioctylsulfosuccinatnatrium (70%ig) als Emulgator und 0,5 Teilen Kaliumpersulfat unter Rühren 3 Stunden bei 65°C polymerisiert. Man erhält eine 40%ige Dispersion. Die mittlere Teilchengrösse des Latex ist ca. 0,1 µm.

b) Herstellung des Stammpolymerisatlatex
Zu einer Vorlage aus 2,5 Teilen des Saatlatex, entsprechend a), 400 Teilen Wasser sowie 0,5 Teilen Kaliumpersulfat wird bei 65°C eine Mischung von 49 Teilen Acrylsäurebutylester, 1 Teil Tricyclodecenylacrylat und 0,38 Teilen des Emulgators innerhalb von 1 Stunde zugegeben. Im Verlauf einer weiteren Stunde fügt man eine Mischung von 49 Teilen Acrylsäurebutylester, 1 Teil Tricyclodecenylacrylat und 0,76 Teilen Emulgator zu. Nach Zugabe von 1 Teil Kaliumpersulfat in 40 Teilen Wasser wird schliesslich innerhalb von 2 Stunden eine Mischung aus 196 Teilen Acrylsäurebutylester, 4 Teilen Tricyclodecenylacrylat sowie 1,52 Teilen des Emulgators zugetropft. Die Polymerisatmischung wird anschliessend noch 2 Stunden bei 65°C nachpolymerisiert. Man erhält eine ca. 40%ige Dispersion mit einem mittleren Teilchendurchmesser von ca. 0,5 µm.

Gibt man statt insgesamt 300 Teilen an Monomeren nur 100 Teile zu, so erhält man einen Latex mit einem mittleren Teilchendurchmesser von etwa 0,3 µm.

c) Herstellung des Pfropfmischpolymerisates
665 Teile Styrol werden in Gegenwart von 2500 Teilen eines Stammpolymerisatlatex der obigen Zusammensetzung und der mittleren Teilchengrösse 0,3 µm bzw. 0,5 µm, 2 Teilen Kaliumpersulfat, 1,33 Teilen Laurylperoxid und 1005 Teilen Wasser unter Rühren bei 60°C polymerisiert. Man erhält eine 40%ige Dispersion, aus der das Festprodukt durch Zusatz einer 0,5%igen Calciumchloridlösung ausgefällt, mit Wasser gewaschen und getrocknet wird.

Vergleichsversuche
98 Teile Acrylsäurebutylester und 2 Teile Tricyclodecenylacrylat werden in 154 Teilen Wasser unter Zusatz von 2 Teilen Dioctylsulfosuccinatnatrium (70%) als Emulgator und 0,5 Teilen Kaliumpersulfat unter Rühren 3 Stunden bei 65°C polymerisiert. Man erhält eine ca. 40%ige Dispersion. Die mittlere Teilchengrösse des Latex ist ca. 0,1 µm.

665 Teile Styrol werden in Gegenwart von 2500 Teilen eines Stammpolymerisatlatex der obigen Zusammensetzung und der mittleren Teilchengrösse 0,1 µm, 2 Teilen Kaliumpersulfat, 1,33 Teilen Laurylperoxid und 1005 Teilen Wasser unter Rühren bei 60°C polymerisiert. Man erhält eine 40%ige Dispersion, aus der das Festprodukt durch Zusatz einer 0,5%igen Calciumchloridlösung ausgefällt, mit Wasser gewaschen und getrocknet wird.

Die in der Tabelle angegebenen Teile an Pfropfmischpolymerisat, Homopolystyrol mit einer Viskositätszahl 74 ml/g und Poly(2,6-dimethyl-1,4-phenylen)ether werden mit jeweils 0,8 Teilen Trisnonylphenylphosphit und 1,5 Teilen Polyäthylen auf einem Zweiwellenextruder bei 280°C geschmolzen, homogenisiert, gemischt und granuliert. Der Poly(2,6-dimethyl-1,4-phenylen)ether hatte eine Grenzviskosität von 0,49 dl/g (gemessen in Chloroform bei 30°C).

Der Erweichungspunkt nach Vicat wurde nach DIN 53460/B und der Schmelzindex nach DIN 53735 bestimmt.

Zur Beurteilung der Alterungsbeständigkeit wurden aus den Mischungen auf einer Spritzgussmaschine vom Typ Arburg-Allrounder 200 bis 280°C Normkleinstäbe hergestellt. Diese wurden in einem Xenogerät 1200 der Firma Heraeus bei 35°C und einer Luftfeuchtigkeit von 60% belichtet. Anschliessend wurde an den Prüfkörpern die Schlagzähigkeit nach DIN 53453 bei 23°C ermittelt.

| Beispiele (erfindungsgemäss) | Pfropfmischpolymerisat | | Homopolystyrol [Gew.-%] | Poly(2,6-dimethyl-1,4-phenylen-ether | Erweichungspunkt nach Vicat [°C] | Schmelzindex 21,5 kg bei 250°C [g/10 min] | Schlagzähigkeit [kJ/m³] nach Belichtung | |
|---|---|---|---|---|---|---|---|---|
| | Gewicht-Teile | Teilchengrösse [µm] | | | | | 0 Std. | 168 Std. |
| 1 | 50 | 0,5 | 25 | 25 | 114 | 186 | n.g.[1] | 30,5 |
| 2 | 50 | 0,5 | 15 | 35 | 125 | 130 | n.g. | 62,2 |
| 3 | 50 | 0,5 | 5 | 45 | 137 | 70 | n.g. | 87,5 |
| 4 | 50 | 0,3 | 25 | 25 | 115 | 179 | n.g. | 75,6 |
| Vergleichsversuche (nicht erfindungsgemäss) | | | | | | | | |
| A | 50 | 0,1 | 25 | 25 | 114 | 141 | n.g. | 2,7 |
| B | 50 | 0,1 | 15 | 35 | 124 | 87 | n.g. | 28,2 |
| C | 50 | 0,1 | 5 | 45 | 137 | 25 | n.g. | 56,3 |

[1] n.g. = nicht gebrochen

## Patentanspruch

1. Thermoplastische Formmassen auf der Grundlage von schlagfest modifizierten Styrolpolymerisaten und Polyphenylenethern, dadurch gekennzeichnet, dass sie als schlagfest modifizierte Styrolpolymerisate solche enthalten, deren Weichkomponente einen mittleren Teilchendurchmesser von grösser als 0,3 µm hat und ein Polymerisat eines Alkylesters der Acrylsäure mit 2 bis 8 Kohlenstoffatomen im Alkylrest enthält, das durch Polymerisation des Acrylsäureesters in Gegenwart von 0,5 bis 10 Gew.-%, bezogen auf die eingesetzten Monomeren eines copolymerisierbaren, mehrfunktionellen, die Vernetzung bewirkenden Monomeren, durchgeführt wird.

## Claim

1. A thermoplastic molding material based on a styrene polymer which has been made impact-resistant, and on a polyphenylene ether, wherein the impact-resistant styrene polymer comprises a soft component which has a mean particle diameter of more than 0.3 µm and contains a polymer of an alkyl acrylate, where alkyl is of 2 to 8 carbon atoms, said polymer being obtained by polymerization of the alkyl acrylate in the presence of from 0.5 to 10% by weight, based on the monomers employed, of a copolymerizable polyfunctional monomer which has a crosslinking action.

## Revendication

1. Matières à mouler thermoplastiques à base de polymères styréniques modifiés pour résister aux chocs et de poly-éthers de phénylène), caractérisées en ce qu'elles contiennent comme polymères styréniques modifiés pour résister aux chocs des polymères, dont la composante souple est constituée de particules d'un diamètre moyen supérieur à 0,3 µm et contient un polymérisat d'un acrylate d'alkyle avec un radical alkyle en $C_2$ à $C_8$, préparé par la polymérisation de l'acrylate en présence de 0,5 à 10% du poids des monomères mis en œuvre d'un monomère polyfonctionnel copolymérisable, provoquant la réticulation.